# EUROPÄISCHE PATENTSCHRIFT

(11) **EP 3 966 544 B1**
(45) Veröffentlichungstag und Bekanntmachung des Hinweises auf die Patenterteilung: **03.07.2024**
(21) Anmeldenummer: 20727928.2
(22) Anmeldetag: 08.05.2020
(51) Int. Cl.: G01M 17/02

(54) **VERFAHREN UND PRÜFSTAND ZUR BESTIMMUNG VON REIFENEIGENSCHAFTEN**
METHOD AND TEST STAND FOR DETERMINING TIRE PROPERTIES
PROCÉDÉ ET BANC D'ESSAI POUR DÉTERMINER DES PROPRIÉTÉS D'UN PNEU

(30) Priorität: 08.05.2019 DE 102019206595
(43) Veröffentlichungstag der Anmeldung: 16.03.2022
(73) Patentinhaber: ZF Friedrichshafen AG, 88046 Friedrichshafen (DE)
(72) Erfinder: EISENBEISS, Jens, 94081 Fuerstenzell (DE); BÖSL, Roland, 94127 Neuburg am Inn (DE)
(86) Internationale Anmeldenummer: PCT/EP2020/062854
(87) Internationale Veröffentlichungsnummer: WO 2020/225417

(56) Entgegenhaltungen:
- WO-A1-2014/092722
- DE-A1- 10 260 000
- DE-A1-102015 224 636
- US-A1- 2015 013 453

## Beschreibung

Die vorliegende Erfindung betrifft ein Verfahren zur Bestimmung von Reifeneigenschaften gemäß dem Oberbegriff von Anspruch 1 und einen Prüfstand zur Bestimmung von Reifeneigenschaften gemäß dem Oberbegriff von Anspruch 18.

Im Stand der Technik sind sog. "High Speed Uniformity"- Messungen an Fahrzeugreifen bekannt, mittels derer die Gleichlaufeigenschaften der Fahrzeugreifen bei hohen Geschwindigkeiten bzw. hohen Reifendrehzahlen ermittelt werden. Die Gleichlaufeigenschaften umfassen dabei vor allem das Auftreten von Kräften aus Schwingungsresonanzen bei bestimmten Drehzahlen, wobei die Schwingungsresonanzen in der Regel unerwünscht sind. Die Anregung der Schwingungsresonanzen ist dabei auf unterschiedliche Ursachen wie etwa Steifigkeitsschwankungen, Geometriefehler, Dickenschwankungen oder Unwuchten der Fahrzeugreifen zurückzuführen. Die getesteten Fahrzeugreifen müssen hinsichtlich der Frequenzen der auftretenden Resonanzen bzw. hinsichtlich der Amplituden der beobachtetet Resonanzen innerhalb vorgegebener Grenzwerte liegen, um für den jeweils vorgesehenen Verwendungszweck, z.B. an einem Sportwagen oder an einem LKW, geeignet zu sein.

In diesem Zusammenhang beschreibt die DE 102 60 000 B4 ein Radkraftdynamometer zum Messen von Reifenkräften, wobei ein Fahrzeugrad an einer Radachse befestigt ist, welche über Wälzlager in einer Hohlwelle gelagert ist. Die Hohlwelle ist hydrostatisch in einem gestellfesten Gehäuse gelagert und weist einen Bund auf, in welchem Kraftsensoren zur Messung von Kräften angeordnet sind. Die auf das Rad wirkenden Kräfte werden somit über die Radachse auf die Hohlwelle übertragen, die ihrerseits reibungsfrei mittels Hydrostatik im Gehäuse schwimmt.

Aus der DE 10 2015 224 636 A1 ist ein Radkraftdynamometer zur Messung von Reifenkräften bekannt. Kräfte und Momente, die auf einen Fahrzeugreifen wirken, werden mittels Kraftsensoren gemessen, wobei das Fahrzeugrad drehbar mittels einer Radachse gelagert ist. Die Radachse ist als Hohlwelle ausgebildet, welche auf einem biegesteifen, ortsfest angeordneten Lagerzapfen gelagert ist. Dadurch bietet die Radachse ein maximales Widerstandsmoment und eine hohe Biegesteifigkeit.

Aus der US 2015/013453 A1 ist eine Vorrichtung bekannt, die eine Auswuchtvorrichtung umfasst, die eine Unwucht eines Werkstücks bestimmt.

Die WO 2014/092722 A1 offenbart ein Verfahren zum Bestimmen eines oder mehrerer Hochgeschwindigkeitsgleichförmigkeitsparameter eines Reifens. Dazu wird der Reifen gemäß einem bestimmten Geschwindigkeitsrampenprofil rotiert, wobei das Geschwindigkeitsrampenprofil das Erhöhen der Drehgeschwindigkeit eines Reifens von null auf eine erste Drehgeschwindigkeit in einer ersten Richtung umfasst und anschließend das Verringern der Drehgeschwindigkeit zurück auf null umfasst. Während des Drehens werden kontinuierlich Gleichförmigkeitsdaten für den Reifen gemessen. Anschließend werden die gemessenen Gleichförmigkeitsdaten analysiert, um einen oder mehrere Hochgeschwindigkeitsgleichförmigkeitsparameter für den Reifen zu bestimmen.

Die bekannten Verfahren zur Bestimmung von Reifeneigenschaften im Rahmen einer Produktionskontrolle mittels der bekannten Vorrichtungen sind jedoch dahingehend nachteilbehaftet, als dass ausschließlich Reifenschwingungen bei fest definierten Geschwindigkeitsstufen bzw. Drehzahlstufen erfasst werden. Durch die Messung bei fest definierten Geschwindigkeiten besteht die Gefahr, dass störende Resonanzen bei der Produktionskontrolle nicht gefunden werden Somit lässt sich jedoch kein zuverlässiger Zusammenhang zwischen einer Störung bzw. einem Defekt des Fahrzeugreifens und einer beobachteten Resonanz herstellen. Bereits kleine Änderungen der Randbedingungen einer Messung, wie etwa Temperatur oder Druck, können eine Eigenschwingung und damit die Resonanzfrequenz in Richtung der Störfrequenz oder davon weg verlagern. Damit ergeben sich zum Teil erheblich veränderte Messergebisse.

Es ist eine Aufgabe der Erfindung, ein verbessertes Verfahren zur Bestimmung von Reifeneigenschaften vorzuschlagen.

Diese Aufgabe wird erfindungsgemäß durch das Verfahren zur Bestimmung von Reifeneigenschaften gemäß Anspruch 1 gelöst. Vorteilhafte Ausgestaltungen und Weiterbildungen der Erfindung gehen aus den abhängigen Ansprüchen hervor.

Die Erfindung betrifft ein Verfahren zur Bestimmung von Reifeneigenschaften, wobei ein Fahrzeugreifen auf einer Felge über eine Radlagerung drehbar gelagert wird, wobei der Fahrzeugreifen in seinem Inneren mittels eines Fluids druckbeaufschlagt wird, wobei der Fahrzeugreifen mit einer Radlast beaufschlagt wird, wobei der Fahrzeugreifen gemäß einer vorgebbaren Geschwindigkeitsrampe auf eine Endgeschwindigkeit beschleunigt wird und wobei der Fahrzeugreifen nach Maßgabe einer Reifengeschwindigkeit zu einer Schwingung mit einer Reifenfrequenz angeregt wird. Das erfindungsgemäße Verfahren zeichnet sich dadurch aus, dass eine vom Fahrzeugreifen aufgrund der Schwingung auf die Radlagerung wirkende Reifenkraft kontinuierlich erfasst wird und dass ein die Reifenkraft über der Reifengeschwindigkeit und über der Reifenfrequenz beschreibender Datensatz erzeugt wird, indem ein Zeitsignal der Geschwindigkeitsrampe einer Fourier-Transformation unterworfen wird.

Erfindungsgemäß ist es also vorgesehen, Reifeneigenschaften eines Fahrzeugreifens zu bestimmen, indem ein auf einer Felge über eine Radlagerung drehbar gelagerter Fahrzeugreifen beschleunigt wird. Die Beschleunigung folgt dabei einer vorgebbaren Geschwindigkeitsrampe, wobei die Geschwindigkeitsrampe bevorzugt bei der Reifengeschwindigkeit Null, also mit dem Stillstand des Fahrzeugreifens, startet und mit der Endgeschwindigkeit endet. Alternativ bevorzugt kann die Geschwindigkeitsrampe aber auch bei einer Geschwindigkeit größer als Null starten. Beispielsweise kann ein Geschwindigkeitsbereich unterhalb der Geschwindigkeitsrampe möglichst schnell durchfahren werden, bevor dann die eigentliche Geschwindigkeitsrampe unter definierten Prüfbedingungen, wie insbesondere einem definierten Innendruck und einer definierten Radlast, durchfahren wird. Die Endgeschwindigkeit ist dabei ebenso vorgebbar wie die Zunahme der Reifengeschwindigkeit, also die Beschleunigung, wobei die Geschwindigkeitsrampe vorteilhafterweise stetig sein soll, d.h., dass die Beschleunigung während des Durchfahrens der Geschwindigkeitsrampe niemals negativ wird. Alternativ bevorzugt kann die die Geschwindigkeitsrampe aber auch rückwärts durchfahren werden, also insbesondere ausschließlich negative Beschleunigungen aufweisen und keine positiven Beschleunigungen aufweisen. Ebenso ist es auch denkbar und bevorzugt, einzelne oder mehrere Geschwindigkeitsbereiche der Geschwindigkeitsrampe vorwärts, also mit positiver Beschleunigung, und rückwärts, also mit negativer Beschleunigung, mehrfach zu durchfahren.

Eine bevorzugt Beschleunigung der Geschwindigkeitsrampe kann z.B. 1 km/hs betragen. Diese Beschleunigung stellt einen in vielen Fällen guten Kompromiss zwischen einem zügigen Durchfahren der Geschwindigkeitsrampe auf der einen Seite und einer ausreichend hohen Messgenauigkeit auf der anderen Seite dar. Da der Fahrzeugreifen über die Radlagerung gelagert ist und die Radlagerung bevorzugt Bestandteil eines Prüfstands ist, ist der Fahrzeugreifen während der Ausführung des erfindungsgemäßen Verfahrens ortsfest im Prüfstand angeordnet. Entsprechend wird unter dem Begriff "Reifengeschwindigkeit" im Sinne der Erfindung eine Abrollgeschwindigkeit des Fahrzeugreifens verstanden, beispielsweise auf einer Lauftrommel oder einem Laufband. Im technischen Sinne wird der Fahrzeugreifen also auf eine bestimmte Winkelgeschwindigkeit beschleunigt und die "Reifengeschwindigkeit" im Sinne der Erfindung ergibt sich dann aus der Winkelgeschwindigkeit und dem Radius des Fahrzeugreifens durch Multiplikation. Bei einer Reifengeschwindigkeit von mehr als Null rotiert der Fahrzeugreifen über die Radlagerung, wodurch der Fahrzeugreifen zu geschwindigkeitsabhängigen Schwingungen angeregt wird. Abhängig von den Eigenfrequenzen des Fahrzeugreifens und den anregenden Schwingungen reagiert der Fahrzeugreifen mit mehr oder weniger stark ausgeprägten Schwingungen. Je weiter die anregenden Schwingungen in die Nähe einer Eigenfrequenz des Fahrzeugreifens rücken, desto ausgeprägter werden die Amplituden der Schwingungen, mit denen der Fahrzeugreifen auf die anregenden Schwingungen reagiert. Die Amplituden werden maximal, wenn eine anregende Schwingung eine Eigenfrequenz des Fahrzeugreifens trifft. In diesem Fall wird auch davon gesprochen, dass die anregende Schwingung eine Resonanz des Fahrzeugreifens trifft. Eine Resonanz des Fahrzeugreifens ist also daran erkennbar, dass die Amplitude einer Schwingung des Reifens zumindest ein lokales Maximum bildet. Das Schwingungsverhalten des Fahrzeugreifens, d.h. die Frequenzposition seiner Eigenschwingungen bzw. seiner Resonanzen, ist dabei nicht nur geprägt durch eine Geometrie, also z.B. eine Größe und eine Breite, des Fahrzeugreifens sowie eine Materialbeschaffenheit, also z.B. eine Steifigkeit, sondern auch durch die Druckbeaufschlagung in seinem Inneren sowie durch die Radlast. Die Amplituden einer Schwingung des Fahrzeugreifens wirken als erfassbare Reifenkraft auf die Radlagerung, wo sie z.B. mittels entsprechend ausgebildeter und angeordneter Kraftsensoren erfasst werden können. Die Kraftsensoren erfassen dabei sowohl eine statische Kraft, die z.B. als Radlast definiert auf den Fahrzeugreifen ausgeübt wird, als auch eine dynamische Kraft, die durch das Abrollverhalten des Fahrzeugreifens bei unterschiedlichen Geschwindigkeiten entsteht. Je höher eine erfasste Reifenkraft nach Abzug der Radlast ist, desto höher ist naturgemäß die ihr zugrunde liegende Amplitude der Schwingung. Somit kann die erfasste Reifenkraft vorteilhaft als Maß für die Amplitude der Schwingung herangezogen werden. Die Schwingungen treten dabei nicht nur in erster Ordnung, sondern auch in höheren Ordnungen auf, so dass auch Amplituden von Schwingungen höherer Ordnungen sowie nicht-ganzzahlige Ordnungen erfasst werden können. Die Reifenkraft wird dabei erfindungsgemäß kontinuierlich während des vollständigen Durchfahrens der Geschwindigkeitsrampe erfasst, also nicht nur bei bestimmten vorgegebenen Geschwindigkeitsstufen oder in bestimmten vorgegebenen Geschwindigkeitsfenstern. Ein Zeitsignal der bekannten Geschwindigkeitsrampe wird dann einer Fourier-Transformation unterworfen, um einen die Reifenkraft über der Reifengeschwindigkeit und über der Reifenfrequenz beschreibenden Datensatz zu erzeugen. Bei dem Zeitsignal handelt es sich bevorzugt um eine Änderung der erfassten Reifenkraft über die Zeit während des Durchfahrens der Geschwindigkeitsrampe. Dadurch wird die statische Kraft, also insbesondere die Radlast, aus dem Datensatz eliminiert.

Wie sich gezeigt hat, beeinflussen die Reifeneigenschaften eines Fahrzeugreifens maßgeblich den erzeugten Datensatz, insbesondere die im Datensatz enthaltene, von der Reifenfrequenz abhängige Reifenkraft bei unterschiedlichen Reifengeschwindigkeiten. Eine Analyse des Datensatzes erlaubt somit umgekehrt eine zuverlässige Aussage über die Reifeneigenschaften. Die Erfindung ermöglicht also auf einfache Weise eine weitestgehend vollständige Bestimmung der Reifeneigenschaften.

Indem der Datensatz die Reifenkraft über der Reifengeschwindigkeit und über der Reifenfrequenz, insbesondere für Schwingungen einer Vielzahl unterschiedlicher Ordnungen, umfasst, handelt es sich also um einen dreidimensionalen Datensatz, welcher die Reifenkraft in Abhängigkeit von der Reifengeschwindigkeit und von der Reifenfrequenz beschreibt.

Die Schwingungen können dabei entlang unterschiedlicher Schwingungsfreiheitsgrade am Fahrzeugreifen auftreten. Üblicherweise sind bis zu sechs unterschiedliche Schwingungsfreiheitsgrade zu beobachten.

Bevorzugt ist es vorgesehen, dass die Geschwindigkeitsrampe nicht nur stetig ansteigt bzw. abfällt, sondern bis zum Erreichen der Endgeschwindigkeit kontinuierlich ansteigt bzw. abfällt.

Zusätzlich zu den Reifenschwingungen können auch Druckschwingungen auftreten, welche auf Druckunterschiede bzw. Dichteunterschiede des Fluids im Inneren des Fahrzeugreifens zurückzuführen sind. Auch das Fluid weist dabei Eigenschwingungen auf, welche einerseits von der Geometrie des Fahrzeugreifens, also der Größe und Breite des Fahrzeugreifens geprägt sind, andererseits aber auch von der Druckbeaufschlagung und der Radlast geprägt sind. Wenn eine Anregungsschwingung auf eine Eigenfrequenz des Fluids trifft, so tritt entsprechend eine Resonanz des Fluids auf. Derartige Resonanzen des Fluids spielen im Rahmen einer industriellen Produktionskontrolle jedoch keine wesentliche Rolle, da ihre Frequenzpositionen neben den bereits genannten Einflussfaktoren auch maßgeblich durch die verwendete Felgenart, auf welcher der Fahrzeugreifen montiert ist, geprägt sind. Das bedeutet, dass Resonanzen des Fluids bei Verwendung einer Prüffelge, wie sie im Zusammenhang mit der industriellen Produktionskontrolle üblich ist, bei anderen Frequenzen und mit anderen Amplituden auftreten als bei Verwendung einer Fahrzeugfelge, wie sie an Kraftfahrzeugen üblicherweise verwendet werden. Da diese Resonanzen in der Regel zudem bei höheren Frequenzen bzw. Ordnungen auftreten als die erfindungsgemäß betrachteten Reifenschwingungen, können sie im Rahmen des erfindungsgemäßen Verfahrens vernachlässigt werden.

Gemäß einer bevorzugten Ausführungsform der Erfindung ist es vorgesehen, dass die Fourier-Transformation eine schnelle Fourier-Transformation ist. Die schnelle Fourier-Transformation ist dabei ein Algorithmus zur vergleichsweise effizienten und schnellen Berechnung der sog. diskreten Fourier-Transformation. Dadurch wird die erfindungsgemäße Erzeugung des Datensatzes vereinfacht und beschleunigt, gleichzeitig muss weniger Rechenleistung zur Durchführung der Fourier-Transformation vorgehalten werden.

Gemäß einer weiteren bevorzugten Ausführungsform der Erfindung ist es vorgesehen, dass der Datensatz für jedes Wertepaar von Reifengeschwindigkeit und Reifenfrequenz einen Reifenkraftwert umfasst. Somit wird die Reifenkraft also nicht nur kontinuierlich erfasst, sondern es werden auch die solcherart kontinuierlich erfassten Reifenkraftwerte zur Erzeugung des Datensatzes herangezogen, so dass der Datensatz ebenfalls die kontinuierlich erfassten Reifenkraftwerte aufweist. Dadurch ist der Datensatz sehr viel umfassender als es vergleichbare Datensätze gemäß dem Stand der Technik sind. Die Betrachtung der Reifeneigenschaften ist dadurch nicht auf einzelne Messbereiche beschränkt. Es ist nämlich ebenfalls eine Erkenntnis der Erfindung, dass bestimmte Defekte bzw. unerwünschte Reifeneigenschaften nicht in allen Geschwindigkeitsbereichen bzw. Frequenzbereichen auftreten bzw. erkennbar sind.

Gemäß einer weiteren bevorzugten Ausführungsform der Erfindung ist es vorgesehen, dass eine Klassifizierung der Reifeneigenschaften erfolgt, indem die Reifenkraft mit einer Referenzkraft in einem vorgebbaren und über ein Reifenfrequenzspektrum sowie ein Reifengeschwindigkeitsspektrum aufgespannten Fenster verglichen wird. Die Fenster geben dabei über das Reifenfrequenzspektrum und das Reifengeschwindigkeitsspektrum jeweils einen anpassbaren Rahmen vor, innerhalb dessen die Reifenkraft einen bestimmten vorgebbaren Wert der Referenzkraft nicht überschreiten darf, damit der Fahrzeugreifen mit der entsprechenden Klassifizierung versehen werden kann. Sofern die Reifenkraft also die vorgebbare Referenzkraft in einem über das Reifenfrequenzspektrum und das Reifengeschwindigkeitsspektrum aufgespannten Fenster nicht überschreitet, wird der Fahrzeugreifen entsprechend klassifiziert. Andernfalls wird der Fahrzeugreifen nicht klassifiziert bzw. negativ klassifiziert in dem Sinne, als dass die Reifenkraft die vorgebbare Referenzkraft im über das Reifenfrequenzspektrum und das Reifengeschwindigkeitsspektrum aufgespannten Fenster an einer oder mehreren Stellen überschreitet. Es kann dabei schon ausreichend sein, dass nur eine einzelne Amplitude der Resonanzen des Fluids eine ihr zugeordnete Referenzamplitude überschreitet, um den Fahrzeugreifen nicht zu klassifizieren bzw. negativ zu klassifizieren. Das Fenster kann mindestens eine Referenzamplitude umfassen oder auch mehrere Referenzamplituden umfassen.

Besonders bevorzugt ist es vorgesehen, dass eine Vielzahl von Reifenkräften mit einer Vielzahl von Referenzkräften in einer Vielzahl von vorgebbaren und über das Reifenfrequenzspektrum sowie das Reifengeschwindigkeitsspektrum aufgespannten Fenstern verglichen wird. Somit kann der Fahrzeugreifen hinsichtlich einer Vielzahl unterschiedlicher Reifeneigenschaften klassifiziert werden.

Die Klassifizierung erfolgt dabei bevorzugt automatisiert in Form eines Softwarealgorithmus, der von einer hierfür ausgebildeten elektronischen Steuereinheit ausgeführt wird.

Gemäß einer besonders bevorzugten Ausführungsform der Erfindung ist es vorgesehen, dass das Fenster bzw. die Vielzahl von Fenstern nach einem vorgesehenen Verwendungszweck des Fahrzeugreifens vorgegeben werden. Daraus ergibt sich der Vorteil, dass der Fahrzeugreifen auf einfache Weise dahingehend klassifiziert werden kann, ob er für einen dem jeweiligen Fenster zugeordneten Verwendungszweck geeignet ist. Beispielsweise unterscheiden sich die Anforderungen an einen Fahrzeugreifen für einen Sportwagen von den Anforderungen an einen Fahrzeugreifen für einen SUV, LKW oder eine Landmaschine.

Gemäß einer weiteren besonders bevorzugten Ausführungsform der Erfindung ist es vorgesehen, dass eine Ordnung einer im Datensatz auftretenden Resonanz der Reifenfrequenz einer Ursache der Resonanz zugeordnet wird. Eine Resonanz tritt dabei immer dann auf, wenn die Schwingung, zu der der Fahrzeugreifen angeregt wird, einer Eigenschwingung des Fahrzeugreifens entspricht. In diesem Fall kommt es zu einer starken Erhöhung der Amplitude der Schwingung. Es hat sich herausgestellt, dass unterschiedlichen Ordnungen der beobachteten Resonanzen unterschiedliche Ursachen zugrunde liegen können, wobei die Ursachen wiederum in den zu bestimmenden Reifeneigenschaften liegen. Somit kann auf vergleichsweise einfache Art und Weise anhand der Ordnung einer beobachteten Resonanz, insbesondere unter Berücksichtigung des anregungsfrequenzabhängigen Auftretens und Erlöschens der Resonanzen, auf eine bestimmte Ausprägung einer spezifischen Reifeneigenschaft geschlossen werden. Je höher dabei die Amplitude der beobachteten Schwingung ist, d.h. je ausgeprägter die Resonanz ist, desto ausgeprägter ist im Allgemeinen auch die entsprechende Reifeneigenschaft.

Gemäß einer besonders bevorzugten Ausführungsform der Erfindung ist es vorgesehen, dass einer Resonanz erster Ordnung eine Exzentrizität und/oder eine Unwucht zugeordnet wird. Wie sich nämlich herausgestellt hat, sind Exzentrizitäten bzw. Unwuchten eines Fahrzeugreifens anhand des Verhaltens einer Resonanz in der Schwingung erster Ordnung zu erkennen. Je ausgeprägter dabei die Amplitude ist, desto ausgeprägter ist auch die die Amplitude verursachende Exzentrizität bzw. Unwucht. Dabei gilt allgemein, dass eine Resonanz erster Ordnung, welche maßgeblich auf eine Unwucht zurückzuführen ist, sich hinsichtlich ihrer Amplitude in etwa quadratisch zur Reifengeschwindigkeit verhält, also bei geringen Geschwindigkeiten ebenfalls vergleichsweise gering ist und mit zunehmender Reifengeschwindigkeit exponentiell ansteigt. Sofern eine Resonanz erster Ordnung maßgeblich auf eine Exzentrizität zurückzuführen ist, so verhält sie sich hinsichtlich ihrer Amplitude im Wesentlichen unabhängig von der Reifengeschwindigkeit, bleibt in ihrer Ausprägung also im Wesentlichen konstant. Sofern eine Exzentrizität und eine Unwucht gleichzeitig auftreten, so kann es in einem bestimmten Bereich der Reifengeschwindigkeit zu einer Auslöschung der beobachteten Amplitude kommen, da die auf die Unwucht zurückzuführende Amplitude und die auf die Exzentrizität zurückzuführende Amplitude einen Phasenversatz von 180° aufweisen. Indem der Datensatz erfindungsgemäß nicht auf einen oder mehrere Geschwindigkeitsbereiche beschränkt ist, kann ein derartiges Verhalten, also z.B. ein gegenseitiges Auslöschen der Amplituden, vorteilhaft erkannt werden und zur Beschreibung der Reifeneigenschaften verwendet werden.

Gemäß einer weiteren besonders bevorzugten Ausführungsform der Erfindung ist es vorgesehen, dass einer Resonanz zweiter Ordnung eine Ovalität zugeordnet wird. Wie sich herausgestellt hat, kann eine ungewollte Ovalität, also ein Abweichen von der gewollten Kreisform des Fahrzeugreifens, zu einer Resonanz zweiter Ordnung führen.

Gemäß einer weiteren besonders bevorzugten Ausführungsform der Erfindung ist es vorgesehen, dass einer Resonanz n-ter Ordnung ein Aufbaufehler oder ein Formgebungsfehler n-ter Ordnung zugeordnet wird. Ein Aufbaufehler oder ein Formgebungsfehler ist dabei ein Fehler, der zu einer Abweichung von der gewollten Kreisform des Fahrzeugreifens führt, entweder aufgrund eines fehlerhaften Aufbaus der unterschiedlichen Lagen, aus denen der Fahrzeugreifen aufgebaut ist, oder aber aufgrund eines Fehlers während des Vulkanisierens des Fahrzeugreifens. Unter einer n-ten Ordnung eines Aufbaufehlers oder eines Formgebungsfehlers wird dabei die Anzahl n der Abweichungen von der Kreisform verstanden. Ein an drei Stellen deformierter Reifen beispielsweise führt zum Auftreten einer Anregung dritter Ordnung. Die Aufbaufehler oder Formgebungsfehler können dabei so gering sein, beispielsweise nur 0,5 mm von der Idealform des Fahrzeugreifens abweichen, dass sie nur über die von Ihnen erzeugte Resonanz erkennbar sind.

Gemäß einer weiteren besonders bevorzugten Ausführungsform der Erfindung ist es vorgesehen, dass einer Resonanz nicht-ganzzahliger Ordnung ein nicht-linearer Effekt zugeordnet wird. Bei gattungsgemäßen aus dem Stand der Technik bekannten Verfahren werden Resonanz nicht-ganzzahliger Ordnung standardmäßig eliminiert und zur Beschreibung der Reifeneigenschaften überhaupt berücksichtigt. Diese erfindungsgemäß bevorzugte Ausführungsform berücksichtigt Resonanz nicht-ganzzahliger Ordnung hingegen nicht nur, sondern nutzt sie vorteilhaft zur Beschreibung der Reifeneigenschaften. Ein nicht-linearer Effekt kann dabei beispielsweise eine Materialunregelmäßigkeit sein. Eine Materialunregelmäßigkeit wiederum kann z.B. durch eine ungleiche Massenverteilung des Fahrzeugreifens entstehen oder sogar durch einen Materialfehler. Derartige Resonanzen nicht-ganzzahliger Ordnung werden im Stand der Technik üblicherweise nicht weiter betrachtet, obwohl sie bei entsprechender Anregung Schwingungen in ein Fahrzeug, an welchem sie montiert sind, eintragen können. Auch wenn die im Einzelfall konkrete Ursache des Auftretens Resonanz nicht-ganzzahliger Ordnung ggf. nicht immer zweifelsfrei bestimmt werden kann, so muss doch die bloße Tatsache, dass die Resonanz bei einer bestimmten Anregung auftritt, bei einer möglichen Verwendung des Fahrzeugreifens berücksichtigt werden.

Gemäß einer weiteren besonders bevorzugten Ausführungsform der Erfindung ist es vorgesehen, dass die einer Schwingung einer Ordnung zugeordneten Reifenkräfte als Kurve über der Reifengeschwindigkeit dargestellt werden, um mittels einer Bestimmung einer Fläche unter der Kurve eine Schwingungsleistung zu ermitteln. Daraus ergibt sich vorteilhaft die Möglichkeit, dass für eine, mehrere oder auch alle im Datensatz enthaltenen Schwingungen unterschiedlicher Ordnungen die Reifenkräfte und die Reifengeschwindigkeiten zweidimensional dargestellt werden können, was wiederum zusätzliche Analyseschritte zur Bestimmung der Reifeneigenschaften erlaubt. Dabei werden die Schwingungen unterschiedlicher Ordnungen jeweils aus dem erfindungsgemäß erzeugten Datensatz extrahiert und jeweils als eigene Kurve dargestellt, wobei die Kurve eine der jeweiligen Ordnung zugeordnete Reifenkraft in Abhängigkeit von der Reifengeschwindigkeit darstellt. Durch Berechnung der Fläche unter einer derartigen Kurve, bevorzugt mittels Integration, kann dann die Schwingungsleistung ermittelt werden. Da die Schwingungsleistung bei Verwendung des Fahrzeugreifens an einem Fahrzeug auf die Radlagerung des Fahrzeugs übertragen wird und von dieser absorbiert werden muss, ist es vorteilhaft, eine Information über die Schwingungsleistung des Fahrzeugreifens vor dessen Verwendung an einem Fahrzeug zu kennen.

Bevorzugt erfolgt eine Klassifizierung der Reifeneigenschaften, indem die Schwingungsleistung mit einer Referenzleistung verglichen wird. Sofern die Schwingungsleistung größer ist als die Referenzleistung, wird der Fahrzeugreifen vorteilhaft nicht klassifiziert. Falls die Schwingungsleistung hingegen kleiner ist als die Referenzleistung, kann der Fahrzeugreifen klassifiziert werden.

Besonders bevorzugt sind für verschiedene vorgesehene Verwendungszwecke des Fahrzeugreifens auch verschiedene Referenzleistungen zum Vergleichen vorgesehen.

Gemäß einer ganz besonders bevorzugten Ausführungsform der Erfindung ist es vorgesehen, dass die Klassifizierung der Reifeneigenschaften erfolgt, indem die Kurve mit einer Referenzkurve verglichen wird. Im Gegensatz zu einem reinen Vergleich der Schwingungsleistung mit einer Referenzleistung ermöglicht ein Vergleich der Kurve mit der Referenzkurve eine vergleichsweise genauere Bewertung der Reifeneigenschaften, da die Kurve nicht bloß die Schwingungsleistung insgesamt beschreibt, sondern darüber hinaus auch ihren konkreten Verlauf, also ihren Anstieg bzw. Abfall, ihre Breite und ihr Maximum. Somit weist sie Informationen darüber auf, bei welchen Reifengeschwindigkeiten mit welchen Amplituden bzw. Reifenkräften zu rechnen ist. Es können also auch zulässige Maxima für die einzelnen Kurven definiert werden, die nicht überschritten werden dürfen. Dadurch wird es möglich, eine Ungeeignetheit eines Fahrzeugreifens für eine Klassifizierung auch dann zu erkennen, wenn beispielsweise die Schwingungsleistung des Fahrzeugreifens insgesamt zwar unterhalb der Referenzleistung liegt, allerdings bei einer oder mehreren Reifengeschwindigkeiten Reifenkräfte auftreten, die eine Verwendung des Fahrzeugreifens für den vorgesehenen Verwendungszweck ungeeignet erscheinen lassen.

Gemäß einer weiteren ganz besonders bevorzugten Ausführungsform der Erfindung ist es vorgesehen, dass die Kurven einzelner Ordnungen durch eine quadratische Gleichung angenähert werden. Eine quadratische Gleichung hat dabei allgemein die Form "ax² + bx + c = 0", wobei a, b und c die Koeffizienten sind, mittels deren Anpassung die quadratische Funktion an die Kurve angenähert wird. Daraus ergibt sich der Vorteil, dass die Kurve und damit die im Datensatz enthaltenen Reifeneigenschaften auf einfache Weise durch eine Gleichung beschrieben werden können, wobei unterschiedliche Reifeneigenschaften dabei spezifischen Koeffizienten zugeordnet werden können. Somit wird es z.B. ermöglicht, die Koeffizienten mit Referenzkoeffizienten zu vergleichen, was wiederum eine besonders einfache, schnelle und zuverlässige Klassifizierung der Reifeneigenschaften erlaubt.

Gemäß einer weiteren ganz besonders bevorzugten Ausführungsform der Erfindung ist es vorgesehen, dass einem quadratischen Teil der Gleichung eine Ungleichmä-ßigkeit in der Masseverteilung zugeordnet wird. Der quadratische Teil der Gleichung wird dabei durch den Term "ax²" dargestellt. Wie sich herausgestellt hat, sind nämlich Ungleichmäßigkeiten in der Masseverteilung eines Fahrzeugreifens ebenso wie Massenverteilungsdefekte eines Fahrzeugreifens anhand der Ausprägung des quadratischen Teils "ax²" erkennbar. Je größer der Koeffizient "a" ist, desto ausgeprägter ist entsprechend auch die Ungleichmäßigkeit in der Masseverteilung des Fahrzeugreifens. Durch Vergleich mit einem Referenzkoeffizienten kann dann beispielsweise eine Klassifikation des Fahrzeugreifens hinsichtlich seiner Ungleichmäßigkeit in der Masseverteilung bzw. eines Massenverteilungsdefekts dahingehend erfolgen, ob der Fahrzeugreifen für einen vorgesehenen Verwendungszweck geeignet ist oder nicht. Z.B. kann eine Anforderung an einen Fahrzeugreifen hinsichtlich seiner Ungleichmä-ßigkeit in der Masseverteilung bei einem schnelldrehenden Sportwagenreifen deutlich höher sein als bei einem vergleichsweise langsam drehenden LKW-Reifen.

Gemäß einer weiteren ganz besonders bevorzugten Ausführungsform der Erfindung ist es vorgesehen, dass einem linearen Teil der Gleichung ein geschwindigkeitsproportionaler Mechanismus zugeordnet wird. Es hat sich gezeigt, dass geschwindigkeitsproportionale Mechanismen des Fahrzeugreifens anhand der Ausprägung des linearen Teils "bx" erkennbar sind.

Gemäß einer weiteren ganz besonders bevorzugten Ausführungsform der Erfindung ist es vorgesehen, dass einem konstanten Teil der Gleichung ein Formfehler oder Steifigkeitsfehler zugeordnet wird. Der konstante Teil der quadratischen Gleichung wird dabei durch den Koeffizienten "c" dargestellt. Es hat sich gezeigt, dass Formfehler oder Steifigkeitsfehler anhand des konstante Teils "c" erkannt werden können.

Gemäß einer bevorzugten Ausführungsform der Erfindung ist es vorgesehen, dass eine effektive Reifenkraft erzeugt wird, indem ein quadratischer Mittelwert der erfassten Reifenkraft einer Ordnung gebildet wird. Die Bildung des quadratischen Mittelwerts folgt dabei bevorzugt dem sog. "Root Mean Square"-Verfahren, welches die Bestimmung der mittleren Reifenkraft über ein vorgebbares Frequenzspektrum ermöglicht. Das vorgebbare Frequenzspektrum ist dabei vorzugsweise so vorgegeben, dass es jeweils ein Maximum umfasst. Die effektive Reifenkraft bietet vorteilhaft eine weitere Möglichkeit, die Reifeneigenschaften zu klassifizieren.

Gemäß einer besonders bevorzugten Ausführungsform der Erfindung ist es vorgesehen, dass eine Klassifizierung der Reifeneigenschaften erfolgt, indem die effektive Reifenkraft mit einer effektiven Referenzkraft verglichen wird. Somit steht vorteilhaft eine weitere Möglichkeit zur Verfügung, den Fahrzeugreifen auf vergleichsweise einfache Art und Weise als für einen vorgesehenen Verwendungszweck geeignet oder ungeeignet zu klassifizieren.

Die Erfindung betrifft weiterhin einen Prüfstand zur Bestimmung von Reifeneigenschaften, umfassend eine Felge, eine Radlagerung, Mittel zur Druckbeaufschlagung eines Fahrzeugreifens, Mittel zur Beaufschlagung des Fahrzeugreifens mit einer Radlast, Mittel zur Beschleunigung des Fahrzeugreifens, Mittel zur Erfassung einer Reifengeschwindigkeit und Mittel zur Erfassung einer Reifenkraft und/oder einer Reifenschwingung, wobei der Fahrzeugreifen mittels der Felge über die Radlagerung drehbar lagerbar ist, wobei der Fahrzeugreifen mittels der Mittel zur Druckbeaufschlagung des Fahrzeugreifens in seinem Inneren mittels eines Fluids druckbeaufschlagbar ist, wobei der Fahrzeugreifen mittels der Mittel zur Beaufschlagung des Fahrzeugreifens mit einer Radlast mit einer Radlast beaufschlagbar ist, wobei der Fahrzeugreifen mittels der Mittel zur Beschleunigung des Fahrzeugreifens gemäß einer vorgebbaren Geschwindigkeitsrampe auf eine Endgeschwindigkeit beschleunigbar ist, so dass der Fahrzeugreifen nach Maßgabe der Reifengeschwindigkeit eine Schwingungsanregung erfährt und auf die Schwingungsanregung mit einer Schwingung reagiert und wobei die Reifengeschwindigkeit mittels der Mittel zur Erfassung der Reifengeschwindigkeit erfassbar ist. Der erfindungsgemäße Prüfstand zeichnet sich dadurch aus, dass eine vom Fahrzeugreifen aufgrund der Schwingung auf die Radlagerung wirkende Reifenkraft mittels der Mittel zur Erfassung der Reifenkraft und/oder der Reifenschwingung kontinuierlich erfassbar ist und dass der Prüfstand weiterhin elektronische Rechenmittel umfasst, wobei die elektronischen Rechenmittel dazu ausgebildet sind, einen die Reifenkraft über der Reifengeschwindigkeit und über einer Reifenfrequenz beschreibenden Datensatz zu erzeugen, indem sie ein Zeitsignal der Geschwindigkeitsrampe einer Fourier-Transformation unterwerfen. Der Prüfstand umfasst somit alle zur Ausführung des erfindungsgemäßen Verfahrens erforderlichen Mittel.

Die Radlagerung ist bevorzugt als reibungsarme Radlagerung ausgebildet, beispielsweise als hydrostatische Gleitlagerung, welche eine Rotation des Fahrzeugreifens ermöglicht.

Die Mittel zur Beschleunigung sind bevorzugt als ein oder mehrere Elektromotoren ausgebildet, welche insbesondere über ein schaltbares Getriebe bzw. ein oder mehrere feste Getriebestufen eine Drehbeschleunigung des Fahrzeugreifens bewirken können.

Die Mittel zur Druckbeaufschlagung des Fahrzeugreifens sind bevorzugt als Fluidpumpe, insbesondere als Luftpumpe, ausgebildet, beispielsweise als Membranpumpe oder Drehschieberpumpe.

Die Mittel zur Beaufschlagung des Fahrzeugreifens mit einer Radlast sind bevorzugt als steuerbarer oder regelbarer Fluidzylinder ausgebildet, der den Fahrzeugreifen während des Durchfahrens der Geschwindigkeitsrampe mit einer vorgebbaren Radlast beaufschlagt. Die Beaufschlagung mit der Radlast durch den Fluidzylinder kann während des Durchfahrens der Geschwindigkeitsrampe beispielsweise konstant sein oder kontrolliert geändert werden.

Die Mittel zur Erfassung der Reifengeschwindigkeit sind bevorzugt dazu ausgebildet, einen Drehwinkel pro Zeiteinheit optisch, magnetisch oder elektromagnetisch zu erfassen.

Die Mittel zur Erfassung der Reifenkraft sind bevorzugt als Kraftsensoren ausgebildet, welche auch eine vergleichsweise schnelle Änderung der auf sie einwirkenden Kraft oder Kräfte erfassen können, insbesondere bis zu 300 Hz. Besonders geeignet als Mittel zur Erfassung der Reifenkraft sind vorteilhaft sog. Piezo-Kraftsensoren.

Gemäß einer bevorzugten Ausführungsform der Erfindung ist es vorgesehen, dass der Prüfstand dazu ausgebildet ist, das erfindungsgemäße Verfahren auszuführen.

Nachfolgend wird die Erfindung anhand von in den Figuren dargestellten Ausführungsformen beispielhaft erläutert.

Es zeigen:
- Fig. 1: schematisch eine Übersicht über die sechs verschiedenen Schwingungsfreiheitsgrade eines Fahrzeugreifens,
- Fig. 2: beispielhaft und schematisch einen erfindungsgemäß erzeugten Datensatz,
- Fig. 3: beispielhaft und schematisch Reifenkräfte, die Schwingungen unterschiedlicher Ordnung zugeordnet sind,
- Fig. 4: beispielhaft und schematisch einen weiteren erfindungsgemäß erzeugten Datensatz und
- Fig. 5: beispielhaft und schematisch den Datensatz der Fig. 4, wobei eine effektive Reifenkraft erzeugt wurde.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

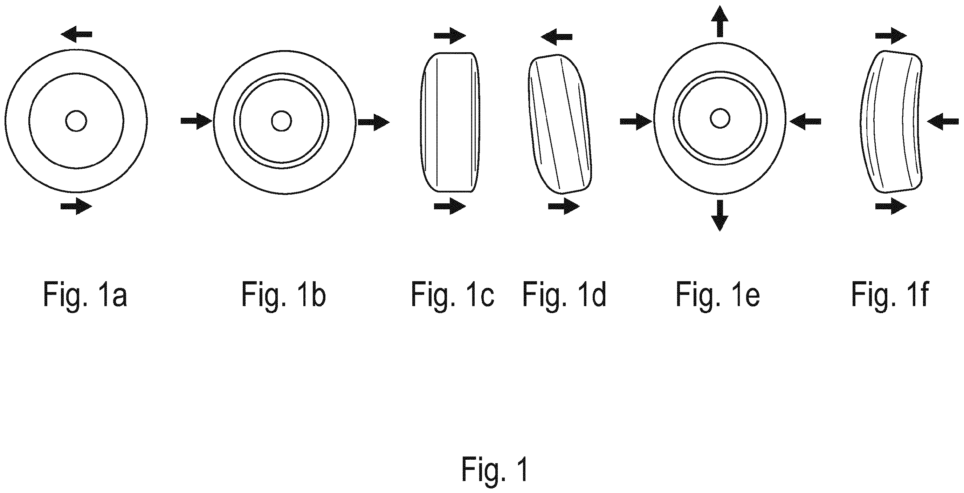

Fig. 1 zeigt schematisch eine Übersicht über die sechs verschiedenen Schwingungsfreiheitsgrade eines Fahrzeugreifens 1, der auf einer Felge 2 montiert ist. Entlang jedes der dargestellten Schwingungsfreiheitsgrade existieren Eigenschwingungen. Diese Eigenschwingungen umfassen neben der jeweiligen Grundschwingung, die im allgemeinen auch als Schwingung erster Ordnung bezeichnet wird, die Oberschwingungen, die im allgemeinen auch als Schwingungen höherer Ordnung bezeichnet werden, beispielsweise als Schwingung zweiter Ordnung oder als Schwingung dritter Ordnung usw. Eine Richtung der Schwingungen ist jeweils durch eine Pfeil bei den Fahrzeugreifen 1 veranschaulicht. Fig. 1a zeigt einen ersten Schwingungsfreiheitsgrad, welcher eine Schwingung entlang der Umlaufrichtung einer Lauffläche des Fahrzeugreifens 1 ermöglicht. Eine derartige Schwingung tritt im Betrieb des Fahrzeugreifens 1 oftmals in Verbindung mit Reifenschlupf auf. Ein zweiter Schwingungsfreiheitsgrad ist in Fig. 1b gezeigt: Hier schwingt der Fahrzeugreifen 1 entlang einer Radialachse vor und zurück, wobei gegenüberliegende Seiten des Fahrzeugreifens 1 in Phase schwingen. Fig. 1c zeigt einen weiteren möglichen Schwingungsfreiheitsgrad, wobei der Fahrzeugreifen 1 gemäß dem in Fig. 1c gezeigten Schwingungsfreiheitsgrad lateral zu seiner Fahrtrichtung, als entlang seiner Rotationsachse, schwingt. Alle Seiten des Fahrzeugreifens 1 schwingen hier in Phase. Fig. 1d zeigt einen nochmals weiteren Schwingungsfreiheitsgrad, bei welchem der Fahrzeugreifen 1 aufgrund der Schwingung gegen seine Rotationsachse verkippt wird. In Fig. 1e ist ein nochmals weiterer Schwingungsfreiheitsgrad zu sehen, gemäß dem der Fahrzeugreifen 1 ähnlich der Schwingung in Fig. 1b schwingt, allerdings erfolgt die Schwingung in Fig. 1e entlang von zwei um 90° versetzten Radialachsen des Fahrzeugreifens 1. Die Schwingungen entlang jeweils einer Radialachse sind gegenphasig. Fig. 1f schließlich zeigt einen nochmals weiteren Schwingungsfreiheitsgrad des Fahrzeugreifens 1, bei welchem der Fahrzeugreifen 1 ebenfalls lateral entlang seiner Rotationsachse schwingt. Allerdings schwingen hier das Zentrum des Fahrzeugreifens 1 und die Außenbereiche des Fahrzeugreifens 1 gegenphasig.

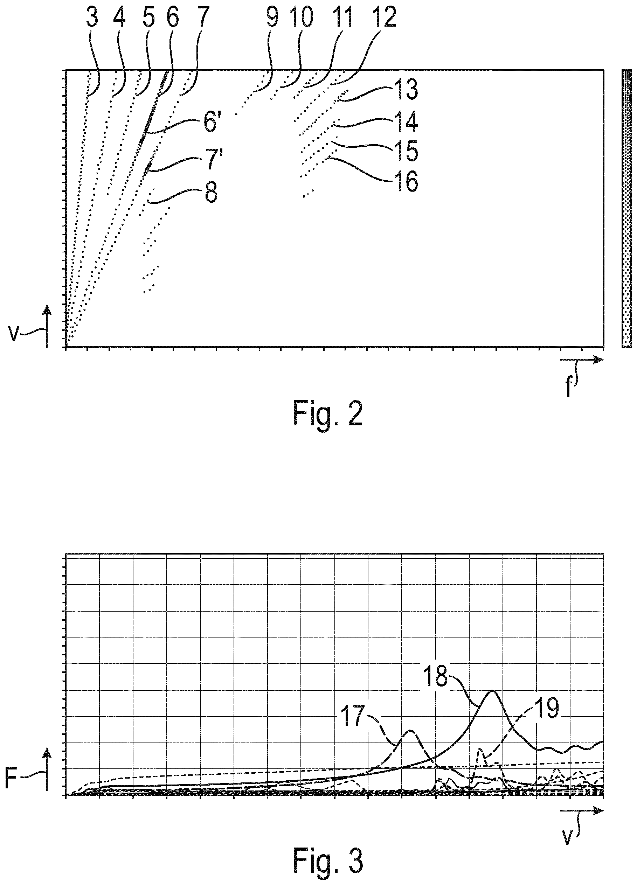

Fig. 2 zeigt beispielhaft und schematisch einen erfindungsgemäß erzeugten Datensatz, welcher die Reifenkraft über der Reifengeschwindigkeit und über der Reifenfrequenz beschreibt. Der Datensatz wurde erzeugt, indem zunächst ein Fahrzeugreifen 1 auf einer Felge 2 über eine Radlagerung drehbar gelagert wurde, mittels eines Fluids, beispielsgemäß mittels Luft, in seinem Inneren mit Druck beaufschlagt wurde und wobei der Fahrzeugreifen 1 weiterhin aus dem Stillstand gemäß einer vorgebbaren stetigen Geschwindigkeitsrampe auf eine Endgeschwindigkeit beschleunigt wurde. Während des Durchfahrens der Geschwindigkeitsrampe wurde der Fahrzeugreifen 1 beispielgemäß mit einer konstanten Radlast beaufschlagt. Dadurch wurde der Fahrzeugreifen 1 nach Maßgabe einer Reifengeschwindigkeit zu einer Schwingung mit einer Reifenfrequenz angeregt, was wiederum zu einer auf die Radlagerung wirkenden Reifenkraft führte, die kontinuierlich erfasst wurde. Ein Zeitsignal der Geschwindigkeitsrampe, beispielgemäß eine Änderung der erfassten Reifenkraft mit der Zeit während des Durchfahrens der Geschwindigkeitsrampe, wurde anschließend einer schnellen Fourier-Transformation unterworfen. Die Reifengeschwindigkeit ist in Fig. 2 dabei auf der y-Achse dargestellt und die Reifenfrequenz ist auf der x-Achse dargestellt. Die Reifenkraft ist anhand einer Farbe bzw. Schraffur erkennbar. Wie in Fig. 2 zu sehen ist, bilden sich in der Darstellung der Reifenkraft über der Reifengeschwindigkeit und über der Reifenfrequenz Linien 3 - 16 aus, an welchen die Reifenkraft größer ist als in den umliegenden Gebieten. Diese Linien 3 - 16 weisen Resonanzen unterschiedlicher Ordnungen auf. Wo eine Anregungsfrequenz auf eine Resonanz des Fahrzeugreifens 1 oder auf einer Resonanz eines zur Druckbeaufschlagung verwendeten Fluids im Fahrzeugreifen 1 trifft, ergibt sich eine deutliche Erhöhung der erfassten Reifenkraft. Beispielsgemäß handelt es sich bei den Resonanzen der Linien 11 - 16 im rechten Ausschnitt des Datensatzes, also bei den Resonanzen ab ca. 200 Hz, um Resonanzen, die auf eine Druckschwingung des Fluids im Fahrzeugreifen 1 zurückzuführen sind. Da sowohl die Amplituden als auch die Frequenzpositionen dieser Resonanzen durch die verwendete Felgenart geprägt sind und beispielsgemäß zur Erzeugung des Datensatzes eine Prüffelge verwendet wurde, eignen sich diese Resonanzen nicht, um den Fahrzeugreifen 1 hinsichtlich einer Verwendung auf einer herkömmlichen Fahrzeugfelge zu klassifizieren. Wie weiterhin zu sehen ist, verlaufen alle in Fig. 2 dargestellten Linien durch den Ursprung und verhalten sich linear zur Reifengeschwindigkeit und damit zur Drehzahl des Fahrzeugreifens 1. Die jeweils spezifische Lage der Resonanzfrequenzen des Fahrzeugreifens 1 wird geprägt durch die Abmessungen des Fahrzeugreifens 1 sowie durch seine Masse, seine Steifigkeit, seine Druckbeaufschlagung durch das Fluid und eine Radlast. Jede Linie 3 - 16 stellt eine Schwingung unterschiedlicher Ordnung dar: Die Linie 3 zeigt die Schwingung erster Ordnung, Linie 4 die Schwingung zweiter Ordnung, Linie 5 die Schwingung dritter Ordnung, Linie 6 die Schwingung vierter Ordnung usw. bis zu Linie 16, welche die Schwingung 14. Ordnung darstellt. Ebenfalls zu sehen ist in Fig. 2, dass die Reifenkraft bei den Linien 6 und 7 in den Bereichen 6' und 7' deutlich zunimmt. Beispielsgemäß liegen die Bereiche 6' und 7' jeweils bei einer Frequenz von 75 Hz, da der Fahrzeugreifen 1 hier eine starke Resonanz aufweist und die Schwingung entsprechend eine hohe Amplitude aufweist. Um zu prüfen, ob der Fahrzeugreifen 1 für einen vorgesehenen Verwendungszweck geeignet ist, beispielsgemäß als Fahrzeugreifen 1 für einen Sportwagen, erfolgt eine Klassifizierung der Reifeneigenschaften, indem die erfasste Reifenkraft mit einer Referenzkraft in einem vorgebbaren und über ein Reifenfrequenzspektrum sowie ein Reifengeschwindigkeitsspektrum aufgespannten Fenster verglichen wird. Da ein Sportwagen üblicherweise auch zur Fortbewegung mit hohen Geschwindigkeiten vorgesehen ist, ist das Fenster über ein Reifengeschwindigkeitsspektrum von Null bis 300 km/h und über ein dem Reifengeschwindigkeitsspektrum entsprechendes Reifenfrequenzspektrum von Null bis 200 Hz aufgespannt. Da der Fahrzeugreifen 1 möglichst gleichmäßig abrollen soll, ist innerhalb dieses Fensters eine Referenzkraft von 35 N vorgegeben. Da die im Bereich 6' und 7' erfassten Reifenkräfte jedoch oberhalb von 35 N liegen, werden die Reifeneigenschaften beispielsgemäß als nicht geeignet für einen Sportwagen klassifiziert.

Fig. 3 zeigt beispielhaft und schematisch Reifenkräfte, die Schwingungen unterschiedlicher Ordnung zugeordnet sind, als Kurven 17, 18, 19 über der Reifengeschwindigkeit. Beispielsgemäß dargestellt sind die Schwingungen erster Ordnung 17, zweiter Ordnung 18 und vierter Ordnung 19. Mittels einer Bestimmung einer Fläche unter den Kurven 17, 18, 19 wird dabei jeweils eine Schwingungsleistung der Schwingung der jeweiligen Ordnung ermittelt. Die jeweils ermittelte Schwingungsleistung wird nun jeweils mit einer der jeweiligen Ordnung zugeordneten Referenzleistung verglichen, um die Reifeneigenschaften zu klassifizieren. Beispielsgemäß ergibt der Vergleich, dass die der zweiten Ordnung 18 zugeordnete Schwingungsleistung größer ist als eine der zweiten Ordnung zugeordnete Referenzleistung, so dass der Fahrzeugreifen 1 für den vorgesehenen Verwendungszweck als ungeeignet klassifiziert wird. Die der ersten Ordnung 17 und der dritten Ordnung 19 zugeordneten Schwingungsleistungen liegen zwar unterhalb der jeweils zugeordneten Referenzleistung, jedoch ist bereits das Überschreiten der der zweiten Ordnung 18 zugeordnete Referenzleistung durch die der zweiten Ordnung 18 zugeordnete Schwingungsleistung ausreichend, um den Fahrzeugreifen 1 als ungeeignet zu klassifizieren.

Gemäß einem weiteren, ebenfalls in Fig. 3 dargestellten Ausführungsbeispiel, werden die Kurven 17, 18 und 19 jeweils durch eine quadratische Gleichung der Form ax² + bx + c = 0 angenähert. Dem quadratischen Teil "ax²" der Gleichung wird dabei eine Unwucht zugeordnet, dem linearen Teil "bx" der Gleichung wird ein geschwindigkeitsproportionaler Mechanismus und dem konstanten Teil "c" der Gleichung wird ein Formfehler oder Steifigkeitsfehler zugeordnet. Anschließend werden die Koeffizienten a, b und c der quadratischen Gleichung für jede der Kurven 17, 18 und 19 jeweils mit Referenzkoeffizienten verglichen. Sofern die Koeffizienten a, b und c jeweils kleiner sind als die entsprechenden Referenzkoeffizienten, wird der Fahrzeugreifen 1 als für die vorgesehene Verwendung geeignet klassifiziert. Andernfalls wird der Fahrzeugreifen 1 als für die vorgesehene Verwendung ungeeignet klassifiziert.

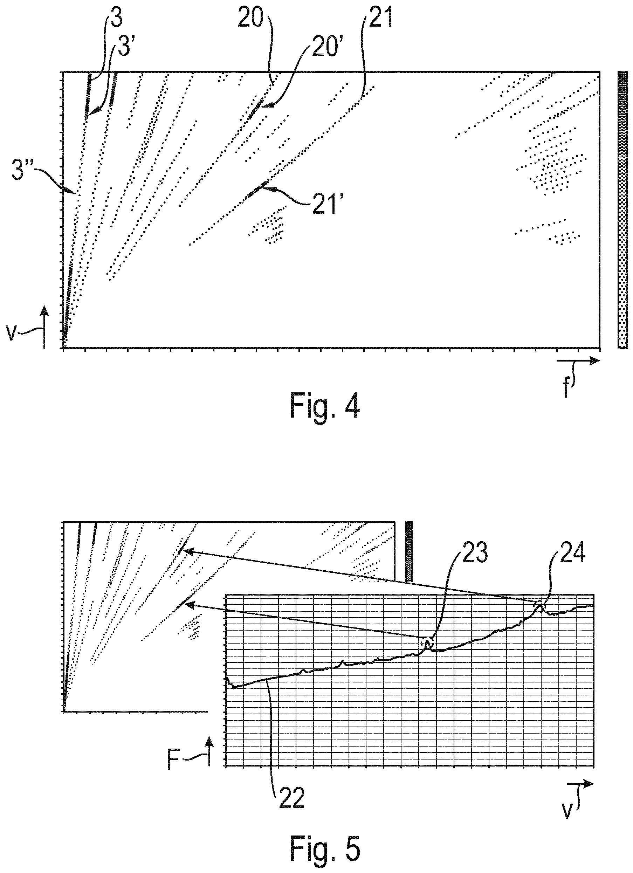

Fig. 4 zeigt beispielhaft und schematisch einen weiteren erfindungsgemäß erzeugten Datensatz, welcher die Reifenkraft über der Reifengeschwindigkeit und über der Reifenfrequenz beschreibt. Der Datensatz der Fig. 4 entspricht im Wesentlichen dem Datensatz der Fig. 2, weist jedoch mit den Linien 20 und 21 in den Bereichen 20' und 21' Resonanzschwingungen nicht-ganzzahliger Ordnung auf. Beispielsgemäß liegen die Resonanzschwingungen in den Bereichen 20' und 21' jeweils bei 175 Hz. Durch Division mit der Frequenz der jeweils zugehörigen Resonanzfrequenz erster Ordnung bei identischer Reifengeschwindigkeit ergibt sich die jeweilige Ordnung der Resonanz in den Bereichen 20' und 21'. Die der Resonanzfrequenz im Bereich 20` zugeordnete Frequenz erster Ordnung kann der Linie 3 bei einer Reifengeschwindigkeit von 170 km/h, also im Bereich 3', entnommen werden. Beispielsgemäß beträgt diese Frequenz 21,4 Hz, woraus sich für die Resonanzfrequenz im Bereich 20` die nicht-ganzzahlige Ordnung von 8,17 ergibt. Auf analoge Weise kann die Ordnung der Resonanzfrequenz im Bereich 21' ermittelt werden. Beispielsgemäß beträgt die Frequenz im Bereich 3" 14,3 Hz, woraus sich für die Resonanzfrequenz im Bereich 21' die nicht-ganzzahlige Ordnung von 12,23 ergibt. Dem Auftreten der nichtganzzahligen Resonanzfrequenzen in den Bereichen 20' und 21' wird dabei eine Materialunregelmäßigkeit des Fahrzeugreifens 1 zugeordnet. Folglich weist der in Fig. 4 gezeigte Datensatz auf das Vorliegen einer Materialunregelmäßigkeit des Fahrzeugreifens 1 hin und der Fahrzeugreifen 1 kann entsprechend klassifiziert werden.

Fig. 5 zeigt beispielhaft und schematisch den Datensatz der Fig. 4, wobei eine effektive Reifenkraft 22 erzeugt wurde, indem ein quadratischer Mittelwert der erfassten Reifenkraft einer Ordnung gebildet wurde. Die Bildung des quadratischen Mittelwerts erfolgt dabei beispielsgemäß nach dem sog. "Root Mean Square"-Verfahren. Die effektive Reifenkraft wird dann geschwindigkeitsabhängig dargestellt, wobei die geschwindigkeitsabhängigen Maxima 23 und 24 der effektiven Reifenkraft zu sehen sind. Die Maxima 23 und 24 entsprechen dabei den Resonanzfrequenzen in den Bereichen 20' und 21' der Linien 20 und 21. Durch Vergleich mit einer Referenzkurve kann nun eine Klassifizierung der Reifeneigenschaften erfolgen, wobei die Reifeneigenschaften beispielsgemäß als für den vorgesehenen Verwendungszweck geeignet klassifiziert werden, wenn die effektive Reifenkraft 22 für alle Geschwindigkeiten kleiner ist als die effektive Reifenkraft. Andernfalls werden die Reifeneigenschaften als für den vorgesehenen Verwendungszweck ungeeignet klassifiziert.

### Bezugszeichen

- 1: Fahrzeugreifen
- 2: Felge
- 3 - 16: Linien, Anregungsfrequenzen
- 3', 3": Frequenzbereich
- 6', 7', 8': Bereich, in dem die Resonanzfrequenz liegt
- 17: Schwingung erster Ordnung
- 18: Schwingung zweiter Ordnung
- 19: Schwingung dritter Ordnung
- 20: Linie, Anregungsfrequenz, Resonanzfrequenz
- 20`: Bereich, in dem die Resonanzfrequenz liegt
- 21: Linie, Anregungsfrequenz, Resonanzfrequenz
- 21': Bereich, in dem die Resonanzfrequenz liegt
- 22: effektive Reifenkraft
- 23, 24: Maxima der effektiven Reifenkraft

## Patentansprüche

1. Verfahren zur Bestimmung von Reifeneigenschaften, wobei ein Fahrzeugreifen (1) auf einer Felge (2) über eine Radlagerung drehbar gelagert wird, wobei der Fahrzeugreifen (1) in seinem Inneren mittels eines Fluids druckbeaufschlagt wird, wobei der Fahrzeugreifen (1) mit einer Radlast beaufschlagt wird, wobei der Fahrzeugreifen (1) gemäß einer vorgebbaren Geschwindigkeitsrampe auf eine Endgeschwindigkeit beschleunigt wird, wobei der Fahrzeugreifen (1) nach Maßgabe einer Reifengeschwindigkeit eine Schwingungsanregung erfährt und auf die Schwingungsanregung mit einer Schwingung reagiert und wobei eine vom Fahrzeugreifen (1) aufgrund der Schwingung auf die Radlagerung wirkende Reifenkraft kontinuierlich erfasst wird und dass ein die Reifenkraft über der Reifengeschwindigkeit und über einer Reifenfrequenz beschreibender Datensatz erzeugt wird, indem ein Zeitsignal der Geschwindigkeitsrampe einer Fourier-Transformation unterworfen wird,
**dadurch gekennzeichnet, dass** der Datensatz für jedes Wertepaar von Reifengeschwindigkeit und Reifenfrequenz einen Reifenkraftwert umfasst.

2. Verfahren nach Anspruch 1,
**dadurch gekennzeichnet, dass** die Fourier-Transformation eine schnelle Fourier-Transformation ist.

3. Verfahren nach mindestens einem der Ansprüche 1 und 2,
**dadurch gekennzeichnet, dass** eine Klassifizierung der Reifeneigenschaften erfolgt, indem die Reifenkraft mit einer Referenzkraft in einem vorgebbaren und über ein Reifenfrequenzspektrum sowie ein Reifengeschwindigkeitsspektrum aufgespannten Fenster verglichen wird.

4. Verfahren nach Anspruch 3,
**dadurch gekennzeichnet, dass** das Fenster nach einem vorgesehenen Verwendungszweck des Fahrzeugreifens (1) vorgegeben wird.

5. Verfahren nach mindestens einem der Ansprüche 1 bis 4,
**dadurch gekennzeichnet, dass** eine Ordnung einer im Datensatz auftretenden Resonanz der Reifenfrequenz einer Ursache der Resonanz zugeordnet wird.

6. Verfahren nach Anspruch 5,
**dadurch gekennzeichnet, dass** einer Resonanz erster Ordnung eine Exzentrizität und/oder eine Unwucht zugeordnet wird.

7. Verfahren nach mindestens einem der Ansprüche 5 und 6,
**dadurch gekennzeichnet, dass** einer Resonanz zweiter Ordnung eine Ovalität zugeordnet wird.

8. Verfahren nach mindestens einem der Ansprüche 5 bis 7,
**dadurch gekennzeichnet, dass** einer Resonanz n-ter Ordnung ein Aufbaufehler oder ein Formgebungsfehler n-ter Ordnung zugeordnet wird.

9. Verfahren nach mindestens einem der Ansprüche 5 bis 8,
**dadurch gekennzeichnet, dass** einer Resonanz nicht-ganzzahliger Ordnung ein nicht-linearer Effekt zugeordnet wird.

10. Verfahren nach mindestens einem der Ansprüche 5 bis 9,
**dadurch gekennzeichnet, dass** einer Schwingung einer Ordnung zugeordnete Reifenkräfte als Kurve über der Reifengeschwindigkeit dargestellt werden, um mittels einer Bestimmung einer Fläche unter der Kurve eine Schwingungsleistung zu ermitteln.

11. Verfahren nach Anspruch 10,
**dadurch gekennzeichnet, dass** die Klassifizierung der Reifeneigenschaften erfolgt, indem die Kurve mit einer Referenzkurve verglichen wird.

12. Verfahren nach mindestens einem der Ansprüche 10 und 11,
**dadurch gekennzeichnet, dass** die Kurven einzelner Ordnungen durch eine quadratische Gleichung angenähert werden.

13. Verfahren nach mindestens einem der Ansprüche 10 bis 12,
**dadurch gekennzeichnet, dass** einem quadratischen Teil der Gleichung eine Ungleichmäßigkeit in der Masseverteilung zugeordnet wird.

14. Verfahren nach mindestens einem der Ansprüche 10 bis 13,
**dadurch gekennzeichnet, dass** einem linearen Teil der Gleichung ein geschwindigkeitsproportionaler Mechanismus zugeordnet wird.

15. Verfahren nach mindestens einem der Ansprüche 10 bis 14,
**dadurch gekennzeichnet, dass** einem konstanten Teil der Gleichung ein Formfehler oder Steifigkeitsfehler zugeordnet wird.

16. Verfahren nach mindestens einem der Ansprüche 1 bis 15,
**dadurch gekennzeichnet, dass** eine effektive Reifenkraft (22) erzeugt wird, indem ein quadratischer Mittelwert der erfassten Reifenkraft einer Ordnung gebildet wird.

17. Verfahren nach Anspruch 16,
**dadurch gekennzeichnet, dass** eine Klassifizierung der Reifeneigenschaften erfolgt, indem die effektive Reifenkraft (22) mit einer effektiven Referenzkraft verglichen wird.

18. Prüfstand zur Bestimmung von Reifeneigenschaften, umfassend eine Felge, eine Radlagerung, Mittel zur Druckbeaufschlagung eines Fahrzeugreifens, Mittel zur Beaufschlagung des Fahrzeugreifens mit einer Radlast, Mittel zur Beschleunigung des Fahrzeugreifens (1), Mittel zur Erfassung einer Reifengeschwindigkeit und Mittel zur Erfassung einer Reifenkraft und/oder einer Reifenschwingung, wobei der Fahrzeugreifen (1) mittels der Felge über die Radlagerung drehbar lagerbar ist, wobei der Fahrzeugreifen (1) mittels der Mittel zur Druckbeaufschlagung des Fahrzeugreifens (1) in seinem Inneren mittels eines Fluids druckbeaufschlagbar ist, wobei der Fahrzeugreifen (1) mittels der Mittel zur Beaufschlagung des Fahrzeugreifens (1) mit einer Radlast mit einer Radlast beaufschlagbar ist, wobei der Fahrzeugreifen (1) mittels der Mittel zur Beschleunigung des Fahrzeugreifens (1) gemäß einer vorgebbaren Geschwindigkeitsrampe auf eine Endgeschwindigkeit beschleunigbar ist, so dass der Fahrzeugreifen nach Maßgabe der Reifengeschwindigkeit eine Schwingungsanregung erfährt und auf die Schwingungsanregung mit einer Schwingung reagiert und wobei die Reifengeschwindigkeit mittels der Mittel zur Erfassung der Reifengeschwindigkeit erfassbar ist und wobei, dass eine vom Fahrzeugreifen (1) aufgrund der Schwingung auf die Radlagerung wirkende Reifenkraft mittels der Mittel zur Erfassung der Reifenkraft und/oder der Reifenschwingung kontinuierlich erfassbar ist und dass der Prüfstand weiterhin elektronische Rechenmittel umfasst, wobei die elektronischen Rechenmittel dazu ausgebildet sind, einen die Reifenkraft über der Reifengeschwindigkeit und über einer Reifenfrequenz beschreibenden Datensatz zu erzeugen, indem sie ein Zeitsignal der Geschwindigkeitsrampe einer Fourier-Transformation unterwerfen, **dadurch gekennzeichnet, dass** der Datensatz für jedes Wertepaar von Reifengeschwindigkeit und Reifenfrequenz einen Reifenkraftwert umfasst.

19. Prüfstand nach Anspruch 18,
**dadurch gekennzeichnet, dass** der Prüfstand dazu ausgebildet ist, ein Verfahren nach mindestens einem der Ansprüche 1 bis 17 auszuführen.

## Claims

1. Method for determining tyre properties, wherein a vehicle tyre (1) on a wheelrim (2) is rotatably mounted by means of a wheel bearing, wherein the vehicle tyre (1) is internally pressurized by means of a fluid, wherein a wheel load is applied to the vehicle tyre (1), wherein the vehicle tyre (1) is accelerated to a terminal speed in accordance with a predeterminable speed ramp, wherein the vehicle tyre (1) is induced to oscillate at a tyre frequency which is dictated by the tyre speed, and wherein a tyre force of the vehicle tyre (1), associated with oscillation, acting on the wheel bearing is detected continuously, and in that a data record which describes the tyre force by reference to the tyre speed and by reference to the tyre frequency is generated, wherein a time signal of the speed ramp is subject to the application of a Fourier transform function, **characterized in that** the data record, for each attribute-value pair of a tyre speed and a tyre frequency, comprises a tyre force value.

2. Method according to Claim 1,
**characterized in that** the Fourier transform function is a fast Fourier transform function.

3. Method according to at least one of Claims 1 and 2,
**characterized in that** a classification of tyre properties is executed, wherein the tyre force is compared with a reference force within a predeterminable window, which spans both a tyre frequency spectrum and a tyre speed spectrum.

4. Method according to Claim 3,
**characterized in that** the window is predetermined in accordance with the intended application of the vehicle tyre (1).

5. Method according to at least one of Claims 1 to 4,
**characterized in that** a cause of resonance is assigned to an order of resonance of the tyre frequency which is observed within the data record.

6. Method according to Claim 6,
**characterized in that** an eccentricity and/or an imbalance is assigned to a first-order resonance.

7. Method according to at least of one of Claims 5 and 6,
**characterized in that** an ovality is assigned to a second-order resonance.

8. Method according to at least one of Claims 5 to 7,
**characterized in that** a construction error is assigned to a n^{th}-order resonance, or a moulding error is assigned to a n^{th}-order resonance.

9. Method according to at least one of Claims 5 to 8,
**characterized in that** a non-linear effect is assigned to a resonance of a non-whole-number order.

10. Method according to at least one of Claims 5 to 9,
**characterized in that** tyre forces which are assigned to an oscillation of a given order are represented in the form of a curve which is plotted against the tyre speed, in order to ascertain an oscillatory power by determining an area under the curve.

11. Method according to Claim 10,
**characterized in that** a classification of tyre properties is executed, wherein the curve is compared with a reference curve.

12. Method according to at least one of Claims 10 and 11,
**characterized in that** curves of individual orders are mutually approximated by means of a quadratic equation.

13. Method according to at least one of Claims 10 to 12,
**characterized in that** an inconsistency in mass distribution is assigned to a quadratic element of the equation.

14. Method according to at least one of Claims 10 to 13,
**characterized in that** a speed-proportional mechanism is assigned to a linear element of the equation.

15. Method according to at least one of Claims 10 to 14,
**characterized in that** a shape defect or rigidity defect is assigned to a constant element of the equation.

16. Method according to at least one of Claims 1 to 15,
**characterized in that** a r.m.s. tyre force (22) is generated, wherein a quadratic mean of a tyre force of a given order thus captured is formed.

17. Method according to Claim 16,
**characterized in that** a classification of tyre properties is executed, wherein the r.m.s. tyre force (22) is compared with a r.m.s. reference force.

18. Test stand for determining tyre properties, comprising a wheelrim, a wheel bearing, means for the pressurization of a vehicle tyre (1), means for the application of a wheel load to the vehicle tyre (1), means for accelerating the vehicle tyre (1) , means for capturing a tyre speed and means for capturing a tyre force and/or a tyre oscillation, wherein the vehicle tyre (1) is rotatably mountable on the wheel bearing by means of the wheelrim, wherein the vehicle tyre (1) is pressurizable by the employment of means for the pressurization of the interior of the vehicle tyre (1) by means of a fluid, wherein a wheel load is applicable to the vehicle tyre (1) by the employment of means for the application of a wheel load to the vehicle tyre (1), wherein the vehicle tyre (1) can be accelerated to a terminal speed by the employment of means for the acceleration of the vehicle tyre (1) in accordance with a predeterminable speed ramp, such that the vehicle tyre undergoes the excitation of an oscillation which is dictated by the tyre speed, and oscillates in response to the excitation of oscillation, and wherein the tyre speed can be captured by the employment of means for capturing the tyre speed, and wherein in that a tyre force of the vehicle tyre (1), associated with oscillation and acting on the wheel bearing, can be captured in a continuous manner by the employment of means for capturing the tyre force and/or the tyre oscillation, and in that the test stand further comprises electronic computing means, wherein the electronic computing means are configured to generate a data record which describes the tyre force by reference to the tyre speed and by reference to a tyre frequency, wherein a time signal of the speed ramp undergoes the application of a Fourier transform function,
**characterized in that** the data record, for each attribute-value pair of a tyre speed and a tyre frequency, comprises a tyre force value.

19. Test stand according to Claim 18,
**characterized in that** the test stand is configured to execute a method according to at least one of Claims 1 to 17.

## Revendications

1. Procédé permettant de déterminer des propriétés de pneu, dans lequel un pneu de véhicule (1) est monté en rotation sur une jante (2) par l'intermédiaire d'un roulement de roue, dans lequel le pneu de véhicule (1) est mis sous pression à l'intérieur de celui-ci au moyen d'un fluide, dans lequel le pneu de véhicule (1) est sollicité par une charge de roue, dans lequel le pneu de véhicule (1) est accéléré selon une rampe de vitesse prédéfinissable jusqu'à une vitesse finale, dans lequel le pneu de véhicule (1) subit une excitation vibratoire conformément à une vitesse de pneu et réagit à l'excitation vibratoire par une vibration, et dans lequel une force de pneu provenant du pneu de véhicule (1) et agissant sur le roulement de roue en raison de la vibration est détectée en continu, et un ensemble de données décrivant la force de pneu en fonction de la vitesse de pneu et en fonction de la fréquence de pneu est généré en ce qu'un signal temporel de la rampe de vitesse est soumis à une transformation de Fourier,
**caractérisé en ce que** l'ensemble de données comprend une valeur de force de pneu pour chaque paire de valeurs de la vitesse de pneu et de la fréquence de pneu.

2. Procédé selon la revendication 1, **caractérisé en ce que** la transformation de Fourier est une transformation de Fourier rapide.

3. Procédé selon au moins l'une des revendications 1 et 2,
**caractérisé en ce qu'**une classification des propriétés de pneu est effectuée en comparant la force de pneu avec une force de référence dans une fenêtre définie sur une plage de fréquence de pneu ainsi que sur une plage de vitesse de pneu.

4. Procédé selon la revendication 3,
**caractérisé en ce que** la fenêtre est spécifiée selon un usage prévu du pneu de véhicule (1).

5. Procédé selon au moins l'une des revendications 1 à 4,
**caractérisé en ce qu'**un ordre d'une résonance de la fréquence de pneu apparaissant dans l'ensemble de données est attribué à une cause de la résonance.

6. Procédé selon la revendication 5,
**caractérisé en ce qu'**une excentricité et/ou un déséquilibre sont attribués à une résonance du premier ordre.

7. Procédé selon au moins l'une des revendications 5 et 6,
**caractérisé en ce qu'**une ovalisation est attribuée à une résonance du deuxième ordre.

8. Procédé selon au moins l'une des revendications 5 à 7,
**caractérisé en ce qu'**une erreur structurelle ou une erreur de conformation du nième ordre est attribuée à une résonance du nième ordre.

9. Procédé selon au moins l'une des revendications 5 à 8,
**caractérisé en ce qu'**un effet non linéaire est attribué à une résonance d'un ordre non entier.

10. Procédé selon au moins l'une des revendications 5 à 9,
**caractérisé en ce que** des forces de pneu attribuées à une vibration d'un certain ordre sont représentées sous forme de courbe en fonction de la vitesse de pneu afin d'établir une puissance de vibration au moyen d'une détermination d'une surface sous la courbe.

11. Procédé selon la revendication 10,
**caractérisé en ce que** la classification des propriétés de pneu est effectuée en comparant la courbe avec une courbe de référence.

12. Procédé selon au moins l'une des revendications 10 et 11,
**caractérisé en ce que** les courbes d'ordres individuels sont approximées par une équation quadratique.

13. Procédé selon au moins l'une des revendications 10 à 12,
**caractérisé en ce qu'**une anomalie de la distribution de la masse est attribuée à une partie quadratique de l'équation.

14. Procédé selon au moins l'une des revendications 10 à 13,
**caractérisé en ce qu'**un mécanisme proportionnel à la vitesse est attribué à une partie linéaire de l'équation.

15. Procédé selon au moins l'une des revendications 10 à 14,
**caractérisé en ce qu'**une erreur de forme ou une erreur de rigidité est attribuée à une partie constante de l'équation.

16. Procédé selon au moins l'une des revendications 1 à 15,
**caractérisé en ce qu'**une force de pneu effective (22) est générée en établissant une moyenne quadratique de la force de pneu détectée d'un certain ordre.

17. Procédé selon la revendication 16,
**caractérisé en ce qu'**une classification des propriétés de pneu est effectuée en comparant la force de pneu effective (22) avec une force de référence effective.

18. Banc d'essai permettant de déterminer des propriétés de pneu, comprenant une jante, un roulement de roue, des moyens pour mettre sous pression un pneu de véhicule, des moyens pour solliciter le pneu de véhicule par une charge de roue, des moyens pour accélérer le pneu de véhicule (1), des moyens pour détecter une vitesse de roue et des moyens pour détecter une force de pneu et/ou une vibration de pneu, dans lequel le pneu de véhicule (1) peut être monté en rotation à l'aide de la jante par l'intermédiaire du roulement de roue, dans lequel le pneu de véhicule (1) peut être soumis à une pression à l'aide des moyens de mise sous pression du pneu de véhicule (1) à l'intérieur de celui-ci au moyen d'un fluide, dans lequel le pneu de véhicule (1) peut être sollicité par une charge de roue à l'aide des moyens de sollicitation du pneu de véhicule (1) par une charge de roue, dans lequel le pneu de véhicule (1) peut être accéléré à l'aide des moyens d'accélération du pneu de véhicule (1) selon une rampe de vitesse prédéfinissable jusqu'à une vitesse finale de sorte que le pneu de véhicule subit une excitation vibratoire conformément à la vitesse de pneu et réagit à l'excitation vibratoire par une vibration, et dans lequel la vitesse de pneu peut être détectée à l'aide des moyens de détection de la vitesse de pneu, et dans lequel une force de pneu provenant du pneu de véhicule (1) et agissant sur le roulement de roue en raison de la vibration peut être détectée en continu à l'aide des moyens de détection de la force de pneu et/ou de la vibration de pneu et le banc d'essai comprend de plus des moyens de calcul électroniques, dans lequel les moyens de calcul électroniques sont réalisés pour générer un ensemble de données décrivant la force de pneu en fonction de la vitesse de pneu et en fonction de la fréquence de pneu en soumettant un signal temporel de la rampe de vitesse à une transformation de Fourier,
**caractérisé en ce que** l'ensemble de données comprend une valeur de force de pneu pour chaque paire de valeurs de la vitesse de roue et de la fréquence de roue.

19. Banc d'essai selon la revendication 18,
**caractérisé en ce que** le banc d'essai est réalisé pour exécuter un procédé selon au moins l'une des revendications 1 à 17.
